# FASCICULE DE BREVET EUROPEEN

(11) **EP 3 368 248 B1**
(45) Date de publication et mention de la délivrance du brevet: **19.06.2019**
(21) Numéro de dépôt: 16809120.5
(22) Date de dépôt: 25.10.2016
(51) Int. Cl.: B25B 5/10, B25B 5/14, B25B 27/04, F16C 43/02, F16C 17/20, F16C 33/10

(54) **DISPOSITIF ET PROCÉDÉ DE FRETTAGE DE RESTRICTEURS DANS LES CIRCUITS DE SECOURS D'UN PALIER LISSE**
VORRICHTUNG UND VERFAHREN ZUR RINGVERSTÄRKUNG VON RESTRIKTOREN IN BEREITSCHAFTSSYSTEMEN EINES ACHSLAGERS
DEVICE AND METHOD FOR HOOP REINFORCING OF RESTRICTORS IN STANDBY SYSTEMS OF A JOURNAL BEARING

(30) Priorité: 27.10.2015 FR 1560244
(43) Date de publication de la demande: 05.09.2018
(73) Titulaire: Safran Transmission Systems, 92700 Colombes (FR)
(72) Inventeur: DOMBEK, Alexis, 77550 Moissy-Cramayel (FR)
(74) Mandataire: Regimbeau
(86) Numéro de dépôt international: PCT/FR2016/052775
(87) Numéro de publication internationale: WO 2017/072441

(56) Documents cités:
- DE-A1-102011 008 810
- DE-C1- 10 015 074
- FR-A1- 2 963 269
- US-A- 3 863 996
- US-A- 3 997 961
- US-A- 6 116 118
- US-A1- 2005 050 721
- US-A1- 2011 162 186

## Description

### DOMAINE TECHNIQUE GENERAL

L'invention se situe dans le domaine des paliers lisses.

La présente invention concerne plus précisément un dispositif de frettage de restricteurs à l'intérieur des circuits de secours d'alimentation hydraulique d'un palier lisse.

L'invention concerne également un procédé de frettage de ces restricteurs utilisant le dispositif précité.

### ETAT DE L'ART

Un palier lisse est un dispositif de guidage en rotation par glissement. Il présente une forme générale cylindrique et est reçu dans l'alésage cylindrique d'un boitier.

Dans certains modes de réalisation, le palier est lubrifié à l'aide d'un film d'huile injecté sous pression depuis l'intérieur du palier, en direction de sa surface extérieure qui constitue la surface située en regard de l'alésage du boitier.

En cas de panne de la pompe de lubrification ou d'obturation du conduit d'amenée d'huile sur la surface extérieure du palier, le palier risque de se bloquer.

Afin d'éviter cela, le palier est muni d'au moins deux circuits de secours d'alimentation hydraulique, dont chacun joint la face intérieure du palier à sa face extérieure. Ces circuits de secours permettent de continuer à alimenter en huile la surface extérieure du palier pendant une durée donnée, en fonction d'un cahier des charges. Un tel palier lisse est par exemple utilisé dans l'aéronautique, bien que cette application ne soit pas limitative.

Afin de pouvoir distribuer l'huile pendant la durée prédéterminée précitée, il convient de limiter le débit d'huile à l'intérieur de chaque circuit de secours et donc de créer une perte de charge à l'intérieur de chacun de ces circuits. A cet effet, des restricteurs de débit sont montés dans chaque circuit de secours.

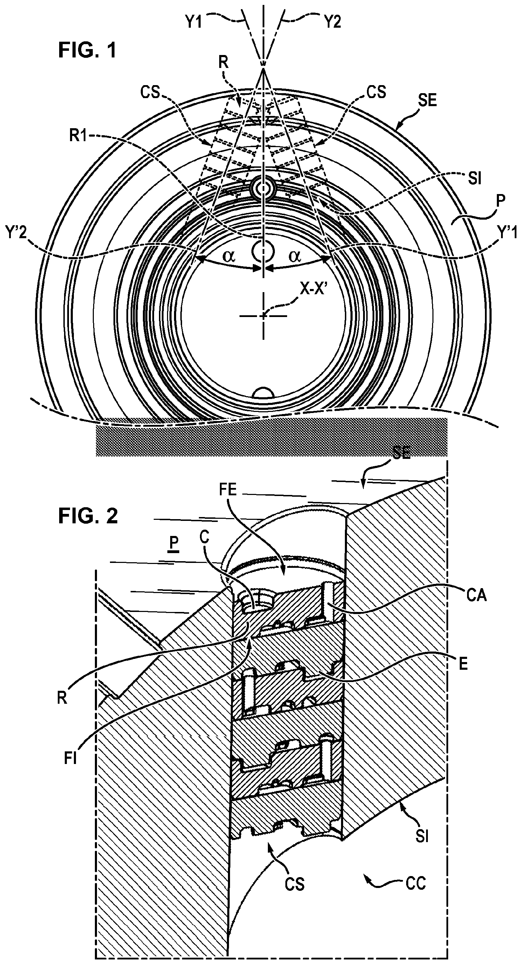

Comme on peut le voir sur la figure 1 jointe, qui représente une partie d'un palier P, chaque circuit de secours CS est un alésage cylindrique qui relie la surface extérieure cylindrique SE du palier à sa surface intérieure cylindrique SI, (voir également la figure 2 jointe qui représente ce circuit de secours).

Les circuits de secours CS ne s'étendent pas radialement dans ce palier P. En conséquence, leurs axes longitudinaux Y1-Y'1, respectivement Y2-Y'2, ne passent pas par le centre du palier P, matérialisé par son axe longitudinal X-X'. Les deux axes longitudinaux Y1-Y'1, respectivement Y2-Y'2, s'étendent de préférence dans un plan perpendiculaire à l'axe X-X'. De préférence encore, ils forment chacun un angle α de part et d'autre d'un rayon R1 du palier P,, les deux angles α étant identiques.

En outre, les deux circuits de secours CS débouchent au niveau de la surface extérieure SE du palier cylindrique P, en étant espacés le long d'une génératrice de ce palier (parallèle à l'axe longitudinal X-X').

Comme on peut le voir sur la figure 2, chaque restricteur de débit R est un cylindre qui comprend un canal CA en forme de chicane joignant les deux faces opposées circulaires du restricteur cylindrique, à savoir sa face extérieure FE et sa face intérieure FI.

En outre, chaque restricteur R comprend sur ses deux faces d'extrémité, un détrompeur. Ce détrompeur est par exemple un élément mâle ou ergot E, faisant saillie par exemple depuis sa face intérieure FI, et apte à coopérer avec un élément femelle ou cavité C, formé par exemple sur sa face extérieure FE.

Les différents restricteurs R, (par exemple au nombre de six sur la figure 2), sont empilés les uns au-dessus des autres. Les détrompeurs E et C permettent de respecter l'orientation angulaire respective des différents restricteurs R, afin de mettre en communication de fluide leurs canaux CA.

Une fois ces restricteurs empilés, ils doivent ensuite être frettés tous ensemble à l'intérieur du circuit de secours CS.

De plus, il est prévu de démonter les restricteurs R en les poussant vers l'intérieur de la cavité centrale CC du palier P. De ce fait, il n'est pas prévu de butée dans le fond du circuit de secours CS. Il est malgré tout nécessaire de contrôler la cote axiale du positionnement de l'empilement des restricteurs R, à l'intérieur du circuit de secours.

Le document US 3 863 996 décrit un palier présentant un restricteur mais ne décrit aucun dispositif de montage de celui-ci.

On connaît déjà d'après le document US 2005/0050721 un dispositif de frettage utilisé pour fretter un arbre dans un disque. Toutefois, ce document ne décrit pas un dispositif conforme à l'invention revendiquée.

Enfin, le document FR 2 963 269 décrit un dispositif d'extraction et d'insertion d'une goupille dans une pièce, mais indépendamment de tout bâti de maintien de ladite pièce.

### PRESENTATION DE L'INVENTION

L'invention a donc pour but de proposer un dispositif de frettage de restricteurs à l'intérieur des circuits de secours d'alimentation hydraulique d'un palier lisse, qui permette :
- d'assurer le maintien des différents restricteurs empilés ensemble pour garantir leur orientation angulaire,
- d'assurer la descente des restricteurs dans l'alésage constituant le circuit de secours,
- de garantir le positionnement axial final de l'empilement de restricteurs à l'intérieur du circuit de secours,
- de reprendre le couple généré par l'effort d'emmanchement des restricteurs, compte tenu du fait que le circuit de secours ne passe pas par le centre du palier,
- de monter des restricteurs dans les deux circuits de secours.

A cet effet, l'invention concerne un dispositif de frettage de restricteurs à l'intérieur d'au moins deux circuits de secours d'alimentation hydraulique d'un palier lisse.

Conformément à l'invention, ce dispositif comprend:
- un bâti de réception dudit palier lisse,
- une seringue d'introduction des restricteurs et
- une broche de reprise de couple,
ledit bâti comprend :
- une plaque de guidage percée d'au moins deux orifices de guidage, inclinés selon le même angle que ceux desdits circuits de secours du palier, de façon se trouver dans le prolongement de ceux-ci lorsque le palier est dans le bâti, ces orifices de guidage étant conformés pour recevoir ladite seringue ou ladite broche de reprise de couple.

Grâce à ces caractéristiques de l'invention, il est possible d'utiliser un seul et même dispositif pour insérer les restricteurs dans les deux circuits de secours orientés différemment. Il n'est pas nécessaire de démonter le palier entre ces deux opérations d'introduction. En outre, un tel dispositif permet de reprendre le couple généré par l'effort d'emmanchement des restricteurs.

Selon d'autres caractéristiques avantageuses et non limitatives de l'invention, prises seules ou en combinaison :
- ledit bâti comprend un berceau de réception dudit palier lisse, au moins une bride de maintien dudit palier, apte à occuper une position dite "passive", dans laquelle elle est écartée du berceau et permet l'introduction du palier dans celui-ci et une position dite "active", dans laquelle elle coopère avec le berceau pour immobiliser ledit palier dans le berceau, des moyens de verrouillage de ladite bride en position active, et ladite plaque de guidage est solidaire de ladite au moins une bride,
- ladite bride est montée pivotante par rapport au berceau autour d'un axe de pivotement disposé à l'une de ses extrémités et elle présente à son extrémité opposée, des moyens de coopération avec lesdits moyens de verrouillage de la bride en position active,
- lesdits moyens de verrouillage sont une tige filetée montée pivotante à sa base par rapport au berceau et un écrou et les moyens de coopération prévus sur la bride sont une ouverture de réception de l'extrémité libre de ladite tige filetée,
- le dispositif comprend deux brides reliées entre elles par ladite plaque de guidage,
- les axes longitudinaux des orifices de guidage ne sont pas sécants avec l'axe longitudinal du bâti :
- les axes longitudinaux des orifices de guidage s'étendent dans un plan vertical perpendiculaire à l'axe longitudinal du bâti et forment un angle identique de part et d'autre d'un plan vertical longitudinal qui inclue l'axe longitudinal du bâti,
- les deux orifices de guidage sont espacés longitudinalement d'une distance correspondant à celle existant entre les orifices de sortie des circuits de secours à la surface extérieure dudit palier lisse,
- ladite seringue d'introduction des restricteurs comprend un corps de seringue, percé d'un alésage cylindrique de réception desdits restricteurs, un poussoir configuré pour pouvoir être inséré dans le corps et pousser les restricteurs hors de celui-ci et un coulisseau cylindrique dont la paroi extérieure est munie d'un joint torique, ce coulisseau étant configuré pour pouvoir être inséré dans le corps de seringue en aval des restricteurs et freiner le déplacement de ceux-ci dans le corps de seringue,
- ladite broche de reprise de couple est un cylindre comprenant plusieurs portions étagées de diamètres différents, dont au moins une zone d'extrémité dont le diamètre extérieur correspond, au jeu de coulissement près, au diamètre intérieur du circuit de secours du palier destiné à être équipé de restricteurs, une zone intermédiaire dont le diamètre extérieur correspond, au jeu de coulissement près, au diamètre intérieur de l'orifice de guidage et une zone contiguë à la précédente dont le diamètre extérieur est supérieur au diamètre intérieur de l'orifice de guidage.

Enfin, l'invention concerne également un procédé de frettage de restricteurs à l'intérieur des circuits de secours d'alimentation hydraulique d'un palier lisse, qui utilise le dispositif précité.

Ce procédé comprend les étapes suivantes consistant à :
- chauffer le palier lisse,
- l'introduire dans le bâti de réception du dispositif de frettage selon l'une des revendications précédentes,
- orienter le palier de façon que les embouchures de sortie de ses circuits de secours soient en regard des orifices de guidage de la plaque de guidage,
- introduire la broche de reprise de couple dans l'un desdits orifices de guidage, dit "premier orifice de guidage" et dans le circuit de secours situé en regard,
- introduire la seringue contenant les restricteurs dans l'autre orifice de guidage, dit "deuxième orifice de guidage" et dans le circuit de secours situé en regard et agir sur la seringue pour fretter lesdits restricteurs à l'intérieur dudit circuit de secours,
- sortir la seringue et la broche desdits orifices de guidage,
- introduire la broche de reprise de couple dans le deuxième orifice de guidage et dans la partie supérieure du circuit de secours situé en regard,
- introduire la seringue contenant les restricteurs dans le premier orifice de guidage et dans le circuit de secours situé en regard et agir sur la seringue pour fretter lesdits restricteurs à l'intérieur dudit circuit de secours,
- sortir la seringue et la broche desdits orifices de guidage.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
- La figure 1 est une vue d'extrémité d'une partie d'un pallier lisse présentant deux circuits de secours d'alimentation hydraulique équipés de restricteurs,
- La figure 2 est une vue de détail et en coupe d'un circuit de secours et des restricteurs,
- La figure 3 est une vue en perspective du bâti du dispositif de frettage conforme à l'invention, représenté en position ouverte,
- La figure 4 est une vue en perspective de ce même bâti, en position fermée, enserrant un pallier lisse,
- La figure 5 est une vue similaire à la figure 4, sur laquelle sont en outre représentés la seringue d'introduction des restricteurs et la broche de reprise de couple du dispositif de frettage conforme à l'invention,
- La figure 6 est une vue en perspective du corps de ladite seringue,
- La figure 7 est une vue en coupe longitudinale de la seringue d'introduction des restricteurs contenant ces derniers,
- La figure 8 est une vue en coupe transversale du bâti et de la seringue conforme à l'invention, et
- Les figures 9 et 10 sont des vues en perspective et en coupe partielle d'une partie du bâti, du palier et de la broche de reprise de couple, cette dernière étant représentée dans deux positions d'utilisation différentes.

### DESCRIPTION DETAILLEE

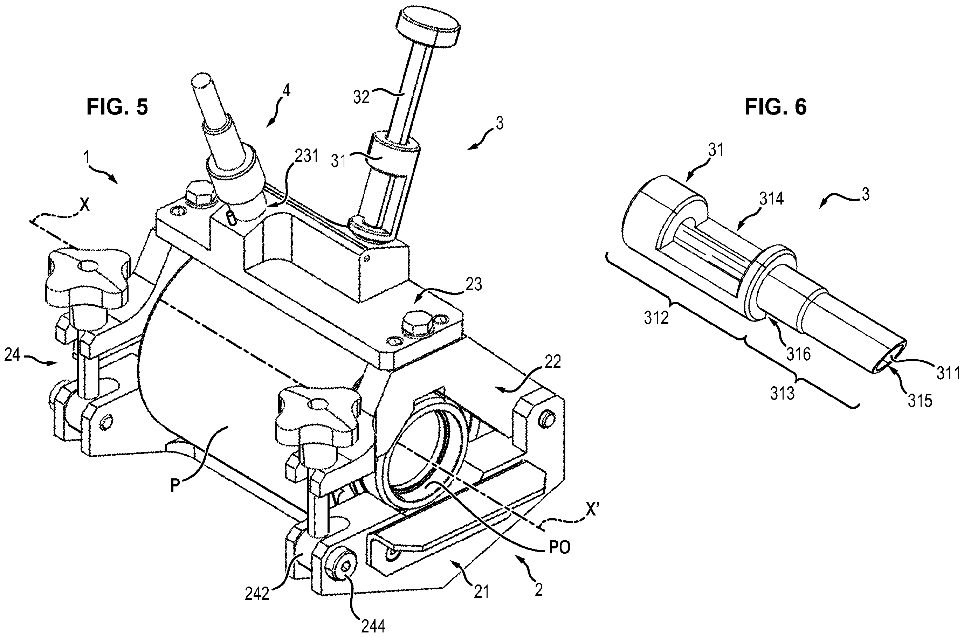

D'une manière générale, et comme on peut le voir sur la figure 5, le dispositif de frettage 1 des restricteurs conforme à l'invention comprend un bâti 2 qui est destiné à recevoir le palier P, une seringue 3 d'introduction des restricteurs à l'intérieur dudit palier et une broche 4 de reprise de couple.

Ces différents éléments vont maintenant être décrits plus en détail.

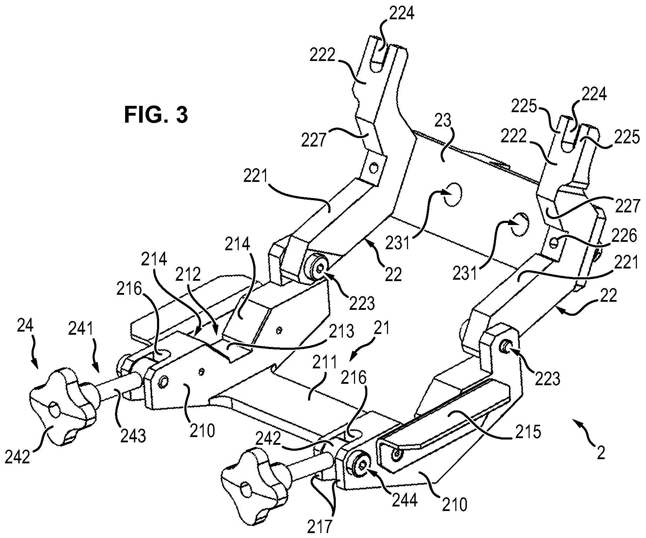

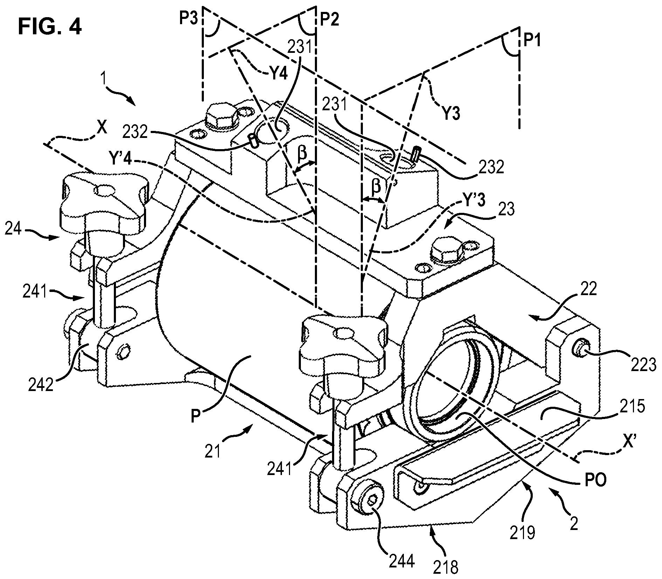

En se reportant aux figures 3 et 4, on peut voir un exemple de réalisation du bâti 2.

Ce bâti 2 comprend une plaque de guidage 23 et de préférence, un berceau 21, au moins une bride 22, de préférence deux, coopérant avec ledit berceau 21 pour bloquer le palier P et des moyens de verrouillage 24 de la bride ou les brides 22 sur le berceau 21.

Le berceau 21 présente une forme générale incurvée, c'est-à-dire qu'il est conformé pour recevoir et supporter la partie inférieure du palier P ou plus précisément les portées PO situées de chaque côté du palier P.

Dans l'exemple de réalisation du berceau décrit ci-après, celui-ci comprend deux traverses 210 parallèles, reliées entre elles par un longeron central 211 longitudinal.

Le bâti 2 présente un axe longitudinal central X-X', qui se confond avec l'axe longitudinal X-X' du palier P, lorsque ce dernier est monté dans le bâti 2.

Chaque traverse 210 présente une cavité 212 de réception du palier ou de sa portée PO dont la concavité est tournée vers la partie intérieure du bâti (vers le haut de la figure 3). La cavité 212 présente un fond plan horizontal 213, bordé par deux parois planes opposées 214, inclinées et s'évasant vers l'extérieur.

Chaque traverse 210 est munie d'une butée axiale 215 qui permet de fixer la position du palier P le long de l'axe longitudinal X-X'du bâti 2.

Ces butées 215 sont positionnées à l'extérieur de chaque traverse 210. Chaque butée se présente par exemple sous la forme d'un profilé en L dont une aile verticale est fixée, par exemple vissée, sur la traverse 210 et dont l'autre aile s'étend horizontalement. Chaque butée 215 obture ainsi une cavité 212.

Les deux traverses 210 présentent en outre au niveau de l'une de leurs extrémités situées d'un même côté du bâti, une ouverture 216 débouchant vers l'extérieur et délimitant deux flasques 217.

Chaque bride 22 présente une forme générale en V à deux branches 221, 222.

L'extrémité de la branche référencée 221 est montée pivotante par rapport au berceau 2, plus précisément par rapport à l'extrémité de la traverse 210 opposé à celle comprenant les flasques 217. Ce montage pivotant est effectué autour d'un axe de pivotement 223, tel qu'une vis, qui s'étend parallèlement à l'axe longitudinal X-X'.

La pointe du V de chaque bride 22 est tronquée, de façon à définir une surface plane contre laquelle est plaquée et fixée l'une des extrémités de la plaque de guidage 23. Les deux brides 22 sont ainsi rendues solidaires dans leur déplacement de pivotement. Dans le cas où il n'y aurait qu'une seule bride 22 ou plus de deux brides, la plaque de guidage 23 serait solidaire de ladite bride ou d'au moins l'une d'entre-elles.

La branche 222 de chaque bride 22 présente une ouverture 224 débouchant vers l'extérieur et ménageant de part et d'autre, deux flasques 225.

La face intérieure de chaque bride 22 présente une forme générale incurvée dont la concavité est orientée vers la concavité de la cavité 212, lorsque les brides sont rapprochées du berceau 21. Plus précisément, la face intérieure de la bride en V 22 présente un fond plan 226, bordé par deux parois planes opposées 227, inclinées et évasées vers l'extérieur.

Les brides 22 peuvent pivoter autour de leur axe respectif 223, entre une position, dite « passive », représentée sur la figure 3, dans laquelle elles sont écartées du berceau 21 et autorisent la mise en place du palier P dans ce berceau et une position, dite « active », représentée sur la figure 4, dans laquelle elles coopèrent avec le berceau pour immobiliser le palier P.

Un mode de réalisation possible des moyens de verrouillage 24 va maintenant être décrit.

Ces moyens de verrouillage comprennent une tige 241 en T et un écrou 242, par exemple un écrou papillon. La branche horizontale 242 du T de la tige 241 est insérée entre les deux flasques 217 du bâti 21 et est montée mobile en rotation entre ces deux flasques, autour d'un axe de pivotement matérialisé par une vis 244.

Le pied du T constitue une tige 243 dont l'extrémité libre est filetée, de façon à pouvoir coopérer avec l'écrou 242.

Lorsque les écrous 242 sont dévissés, et que les tiges 241 en T sont écartées vers l'extérieur, les brides 22 peuvent être déplacées en position passive.

Inversement, lorsque le palier P est en place, comme représenté sur la figure 4, les tiges 241 sont relevées de façon à venir s'insérer dans l'ouverture 224 ménagée entre les flasques 225. Le vissage de l'écrou 242 permet ensuite de maintenir les deux brides verrouillées avec le berceau 21.

Comme on peut le voir à la figure 4, la plaque de guidage 23 est suffisamment épaisse ou présente une surépaisseur, dans laquelle sont ménagés deux orifices de guidage 231.

Ces orifices 231 traversent la plaque 23 de part en part.

Les deux orifices de guidage 231 sont ménagés dans la plaque 23 de façon que leurs axes longitudinaux respectifs Y3-Y'3 et Y4-Y'4 se trouvent dans le prolongement des axes longitudinaux Y2-Y'2, respectivement Y1-Y'1 des circuits de secours CS du palier P lorsque ce dernier est placé dans le bâti 2.

Dans le cas particulier qui correspond au palier P précédemment décrit, les axes longitudinaux Y3-Y'3 et Y4-Y'4 s'étendent dans un plan vertical P1, respectivement un plan vertical P2 distinct de P1, perpendiculaires à l'axe longitudinal X-X'. En outre, les axes Y3-Y'3 et Y4-Y'4 ne coupent pas l'axe longitudinal X-X'. Enfin, les deux axes longitudinaux Y3-Y'3 et Y4-Y'4 forment un angle β de part et d'autre d'un plan P3 vertical longitudinal incluant l'axe X-X'. Les deux angles β sont identiques et identiques à l'angle α décrit précédemment.

En outre, de façon avantageuse, un détrompeur 232, tel qu'un ergot en saillie, est disposé à proximité de chacun des orifices de guidage 231.

De façon avantageuse, la base du berceau 21, plus précisément celle des traverses 210 comprend deux faces planes, à savoir une face 218 perpendiculaire à l'axe Y3-Y'3 de l'ouverture de guidage 231 et une face 219 perpendiculaire à l'axe Y4-Y'4.

Un exemple de réalisation de la seringue 3 d'introduction des restricteurs R va maintenant être décrite en liaison avec les figures 6 à 8.

Cette seringue 3 comprend un corps 31, un poussoir 32 et un coulisseau 33.

Le corps 31 est cylindrique et présente un alésage central 311 qui le traverse de part en part. Le diamètre intérieur de cet alésage 311 correspond au jeu de coulissement près au diamètre extérieur des restricteurs R.

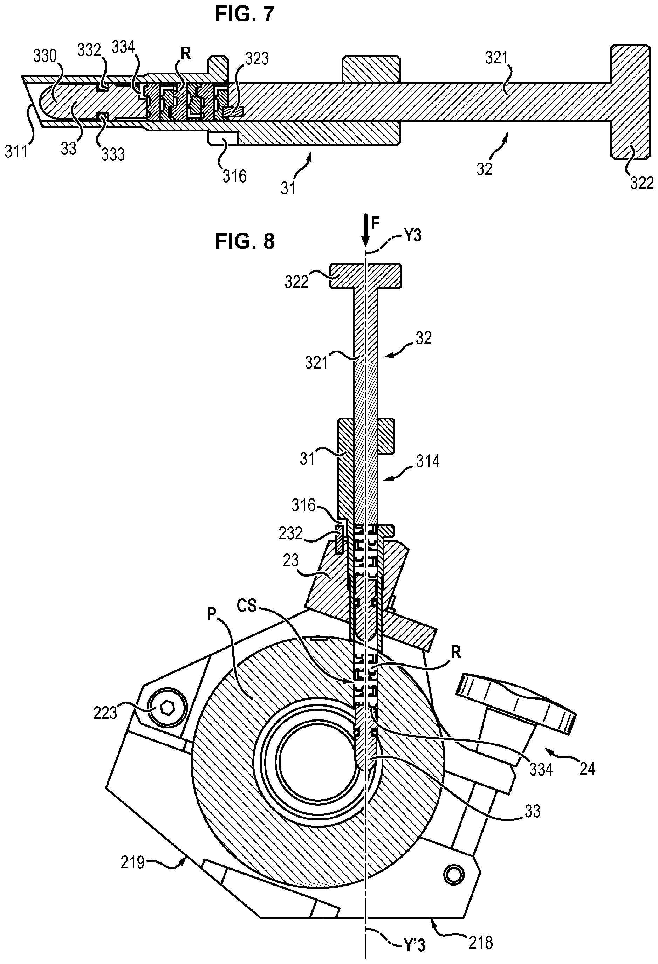

Le corps 31 comprend une partie arrière 312 et une partie avant 313. La partie arrière 312 présente un diamètre extérieur supérieur à celui de la partie avant 313 et également supérieur à celui de l'orifice de guidage 231, de sorte que cette partie arrière 312 vient en butée contre la plaque de guidage 23, lorsque la seringue est insérée dans cet orifice, comme on peut le voir sur les figures 5 et 8.

La partie avant 313 présente quant à elle un diamètre correspondant au jeu de coulissement près au diamètre intérieur de l'orifice de guidage 231.

La partie arrière 312 est munie d'une fenêtre 314 qui correspond à un enlèvement d'une portion hémicylindrique du corps 31 sur une partie de la longueur de la partie arrière 312. Cette fenêtre débouche dans l'alésage 311 et permet l'introduction des restricteurs R.

De préférence, l'extrémité avant 315 du corps 31 présente une section incurvée qui épouse la forme de la face extérieure cylindrique du palier P. Enfin, la partie arrière 312 présente avantageusement une lumière 316 au voisinage de la zone d'intersection avec la partie avant 313, cette lumière 316 étant destinée à recevoir l'ergot de détrompage 232.

Comme on peut le voir sur la figure 7, le poussoir 32 comprend une tige 321 cylindrique dont le diamètre extérieur correspond au jeu de coulissement près au diamètre intérieur de l'alésage 311, de façon à pouvoir coulisser à l'intérieur de celui-ci et comprend également une tête 322, de plus grand diamètre, sur laquelle il est possible d'exercer une poussée (voir flèche F sur la figure 8) pour insérer les restricteurs dans le palier P.

De façon avantageuse, l'extrémité libre de la tige 321 est munie d'un doigt 323, configuré pour pouvoir être reçu dans la cavité C du dernier restricteur R de l'empilement de restricteurs. Ce doigt 323 permet d'empêcher la rotation axiale des restricteurs R.

Le coulisseau 33 est une pièce cylindrique dont le diamètre extérieur correspond au jeu de coulissement près au diamètre intérieur de l'alésage 311 et du circuit de secours CS. Ce coulisseau 33 présente par exemple une extrémité avant 330 de forme préférentiellement arrondie. Il comprend une gorge annulaire 332, à sa périphérie extérieure, destinée à recevoir un joint torique 333. Enfin, de préférence, l'extrémité arrière du coulisseau 33 comprend une cavité 334 destinée à coopérer avec l'élément mâle E du premier restricteur de l'empilement. La coopération de cette cavité 334 avec le restricteur situé au-dessus permet d'empêcher la rotation sur lui-même du coulisseau 33.

Une fois les différents restricteurs R empilés les uns sur les autres et introduits dans l'alésage 311, via la fenêtre 314, le poussoir 32 peut être actionné pour se déplacer d'une position d'origine représentée à la partie supérieure de la figure 8 vers une position d'introduction représentée à la partie basse de cette même figure 8.

Le joint torique 333 du coulisseau 33 permet de générer un effort sur les parois du circuit de secours et de limiter le glissement du coulisseau, ce qui permet de retenir ainsi les restricteurs R.

L'ensemble empilement de restricteurs R et coulisseau 33 est descendu dans le circuit de secours CS, à l'aide du poussoir 32, sur lequel une presse non représentée sur les figures exerce une pression F. Avantageusement on fait pivoter le bâti 21 pour que la face 218 ou 219 perpendiculaire à l'orifice 231 dans lequel on est en train d'insérer les restricteurs R repose sur un plan horizontal (voir figure 8).

Cette opération est réalisée par frettage. Pour ce faire, le palier P est placé dans un four afin que le circuit de secours CS se dilate. Il est ensuite placé sur le bâti 2 et plus précisément dans l'exemple de réalisation ici décrit, est placé sur le berceau 21 maintenu en position par les brides 22 et c'est seulement ensuite que les restricteurs R sont insérés en force avec la seringue 3.

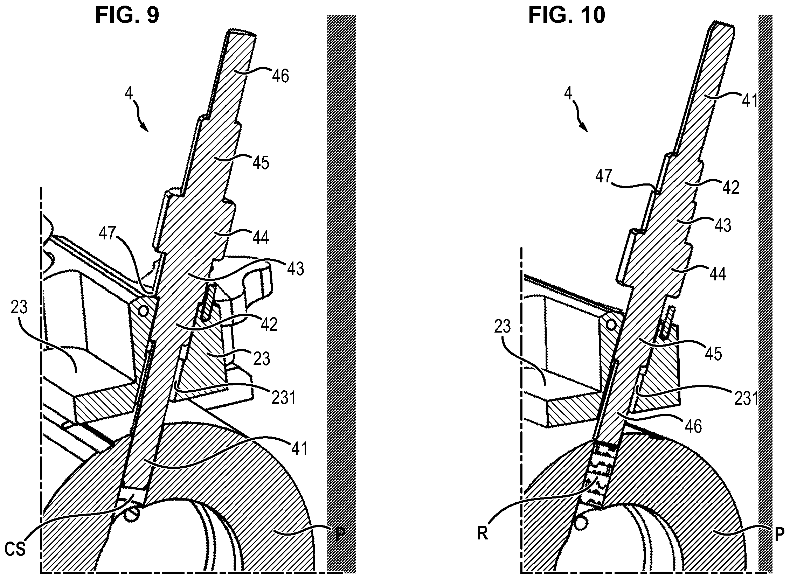

La broche 4 de reprise de couple va maintenant être décrite en liaison avec les figures 9 et 10.

Cette broche est destinée à être introduite dans le premier circuit de secours CS, pendant que la seringue 3 est introduite dans le deuxième circuit de secours CS, de façon à reprendre le couple généré sur le palier P lors du frettage des restricteurs R et à empêcher la rotation du palier autour de son axe longitudinal X-X'.

Cette broche 4 a également pour rôle d'être introduite dans le deuxième circuit de secours CS pendant que la seringue 3 est insérée dans le premier circuit de secours pour y introduire les restricteurs.

Comme cela apparait mieux sur la figure 10, la broche de reprise 4 présente une forme générale cylindrique avec des zones successives de diamètres croissants puis décroissants. Sur la figure 10 et du haut en bas de celle-ci, les six zones de la broche sont référencées respectivement 41, 42, 43, 44, 45 et 46. La zone 44 est la zone de plus grand diamètre extérieur.

La zone 43 présente un diamètre extérieur plus faible que celui de la zone 44 mais supérieur au diamètre intérieur de l'orifice de guidage 231. La zone 42 présente un diamètre extérieur inférieur à celui de la zone 43 et identique à celui de l'orifice de guidage 231. Un épaulement annulaire 47 s'étend entre les zones 42 et 43. Enfin, la zone 41 présente un diamètre extérieur inférieur à celui de la zone 42 et identique ou légèrement inférieur à celui du circuit de secours CS du palier que l'on souhaite équiper de restricteurs. La zone 45 présente le même diamètre extérieur que la zone 42 et la zone 46 le même diamètre extérieur que la zone 41.

Lorsque le palier P n'est encore équipé d'aucun restricteur R, la broche de reprise 4 est insérée de façon que la zone 41 pénètre à l'intérieur du circuit de secours CS vide et que l'épaulement 47 vienne en butée contre la face extérieure de la plaque de guidage 23. Cette position est représentée sur la figure 9. La longueur de la zone 41 est adaptée de façon à pénétrer jusqu'à l'intérieur du circuit de secours.

Les restricteurs R sont insérés avec la seringue dans l'autre circuit de secours. Le coulisseau 33 tombe dans la cavité centrale CC du palier. Ensuite, on retire alors la seringue 3 et la broche 4 est retournée de façon à ce que son extrémité (zone 46) soit insérée à l'extrémité supérieure du conduit de secours CS jusqu'à venir en butée contre le dernier restricteur R de l'empilement. La zone 46 est donc plus courte que la zone 41. Dans cette position, représentée sur la figure 10, la broche 4 joue le même rôle que précédemment et la seringue 3 peut être utilisée pour fréter l'empilement de restricteurs R dans l'autre circuit de secours.

On notera que cette broche 4 réversible pourrait également être remplacée par deux broches différentes, l'une comprenant les zones 41 à 44, l'autre les zones 44 à 46.

## Revendications

1. Dispositif de frettage (1) de restricteurs à l'intérieur d'au moins deux circuits de secours d'alimentation hydraulique d'un palier lisse, comprenant:
- un bâti (2) de réception dudit palier lisse,
**caractérisé en ce que** le dispositif de frettage comprend:
- une seringue (3) d'introduction des restricteurs et
- une broche (4) de reprise de couple,
et **en ce que** ledit bâti (2) comprend :
- un berceau (21),
- une plaque de guidage (23) percée d'au moins deux orifices de guidage (231), inclinés selon le même angle que ceux desdits circuits de secours du palier, de façon à se trouver dans le prolongement de ceux-ci lorsque le palier est dans le bâti (2), ces orifices de guidage (231) étant conformés pour recevoir ladite seringue (3) ou ladite broche (4) de reprise de couple.

2. Dispositif selon la revendication 1, **caractérisé en ce que** ledit bâti (2) comprend :
- un berceau (21) de réception dudit palier lisse,
- au moins une bride (22) de maintien dudit palier, apte à occuper une position dite "passive", dans laquelle elle est écartée du berceau (21) et permet l'introduction du palier dans celui-ci et une position dite "active", dans laquelle elle coopère avec le berceau (21) pour immobiliser ledit palier dans le berceau,
- des moyens de verrouillage (24) de ladite bride en position active,
et **en ce que** ladite plaque de guidage (23) est solidaire de ladite au moins une bride (22).

3. Dispositif selon la revendication 2, **caractérisé en ce que** ladite bride (22) est montée pivotante par rapport au berceau (21) autour d'un axe de pivotement (223) disposé à l'une de ses extrémités et **en ce qu'**elle présente à son extrémité opposée, des moyens (224) de coopération avec lesdits moyens de verrouillage (24) de la bride en position active.

4. Dispositif selon la revendication 3, **caractérisé en ce que** lesdits moyens de verrouillage (24) sont une tige filetée (241) montée pivotante à sa base par rapport au berceau (21) et un écrou (242) et **en ce que** les moyens de coopération (224) prévus sur la bride (22) sont une ouverture de réception de l'extrémité libre de ladite tige filetée (241).

5. Dispositif selon l'une des revendications 2 à 4, **caractérisé en ce qu'**il comprend deux brides (22) reliées entre elles par ladite plaque de guidage (23).

6. Dispositif selon l'une des revendications précédentes, **caractérisé en ce que** les axes longitudinaux (Y3-Y'3, Y4-Y'4) des orifices de guidage (231) ne sont pas sécants avec l'axe longitudinal (X-X') du bâti (2).

7. Dispositif selon la revendication 6, **caractérisé en ce que** les axes longitudinaux (Y3-Y'3, Y4-Y'4) des orifices de guidage (231) s'étendent dans un plan vertical (P1, P2) perpendiculaire à l'axe longitudinal (X-X') du bâti (2) et forment un angle (β) identique de part et d'autre d'un plan vertical longitudinal (P3) qui inclue l'axe longitudinal (X-X') du bâti.

8. Dispositif selon l'une des revendications précédentes, **caractérisé en ce que** les deux orifices de guidage (231) sont espacés longitudinalement d'une distance correspondant à celle existant entre les orifices de sortie des circuits de secours à la surface extérieure dudit palier lisse.

9. Dispositif selon l'une des revendications précédentes, **caractérisé en ce que** ladite seringue (3) d'introduction des restricteurs comprend un corps de seringue (31), percé d'un alésage cylindrique (311) de réception desdits restricteurs, un poussoir (32) configuré pour pouvoir être inséré dans le corps et pousser les restricteurs hors de celui-ci et un coulisseau cylindrique (33) dont la paroi extérieure est munie d'un joint torique (333), ce coulisseau (33) étant configuré pour pouvoir être inséré dans le corps de seringue (31) en aval des restricteurs et freiner le déplacement de ceux-ci dans le corps de seringue.

10. Dispositif selon l'une des revendications précédentes, **caractérisé en ce que** ladite broche (4) de reprise de couple est un cylindre comprenant plusieurs portions étagées de diamètres différents, dont au moins une zone d'extrémité (41, 46) dont le diamètre extérieur correspond, au jeu de coulissement près, au diamètre intérieur du circuit de secours du palier destiné à être équipé de restricteurs, une zone intermédiaire (42, 45) dont le diamètre extérieur correspond, au jeu de coulissement près, au diamètre intérieur de l'orifice de guidage (231) et une zone (43, 44) contiguë à la précédente dont le diamètre extérieur est supérieur au diamètre intérieur de l'orifice de guidage (231).

11. Procédé de frettage de restricteurs à l'intérieur des circuits de secours d'alimentation hydraulique d'un palier lisse, **caractérisé en ce qu'**il comprend les étapes suivantes consistant à :
- chauffer le palier lisse,
- l'introduire dans le bâti (2) de réception du dispositif de frettage selon l'une des revendications précédentes,
- orienter le palier de façon que les embouchures de sortie de ses circuits de secours soient en regard des orifices de guidage (231) de la plaque de guidage (23),
- introduire la broche (4) de reprise de couple dans l'un desdits orifices de guidage (231), dit "premier orifice de guidage" et dans le circuit de secours situé en regard,
- introduire la seringue (3) contenant les restricteurs dans l'autre orifice de guidage (231), dit "deuxième orifice de guidage" et dans le circuit de secours situé en regard et agir sur la seringue (3) pour fretter lesdits restricteurs à l'intérieur dudit circuit de secours,
- sortir la seringue (3) et la broche (4) desdits orifices de guidage (231),
- introduire la broche (4) de reprise de couple dans le deuxième orifice de guidage (231) et dans la partie supérieure du circuit de secours situé en regard,
- introduire la seringue (3) contenant les restricteurs dans le premier orifice de guidage (231) et dans le circuit de secours situé en regard et agir sur la seringue pour fretter lesdits restricteurs à l'intérieur dudit circuit de secours,
- sortir la seringue (3) et la broche (4) desdits orifices de guidage (231).

## Patentansprüche

1. Vorrichtung zur Ringverstärkung (1) von Restriktoren im Inneren von mindestens zwei Bereitschaftssystemen zur hydraulischen Versorgung eines Gleitlagers, umfassend:
- ein Aufnahmegestell (2) des Gleitlagers, **dadurch gekennzeichnet, dass** die Vorrichtung zur Ringverstärkung umfasst:
- eine Einführspitze (3) der Restriktoren und
- eine Momentübernahmespindel (4),
und dass das Gestell (2) umfasst:
- eine Halterung (21),
- eine Führungsplatte (23), durchbrochen von mindestens zwei Führungsöffnungen (231), die in demselben Winkel wie die der Bereitschaftssysteme des Lagers geneigt sind, so dass sie sich in der Verlängerung dieser befinden, wenn das Lager in dem Gestell (2) ist, wobei diese Führungsöffnungen (231) ausgebildet sind, um die Spitze (3) oder die Momentübernahmespindel (4) aufzunehmen.

2. Vorrichtung nach Anspruch 1, **dadurch gekennzeichnet, dass** das Gestell (2) umfasst:
- eine Aufnahmehalterung (21) des Gleitlagers,
- mindestens einen Halteflansch (22) des Lagers, der imstande ist, eine so genannte "passive" Position einzunehmen, in welcher er von der Halterung (21) beabstandet ist und das Einführen des Lagers in dieselbe erlaubt, und eine so genannte "aktive" Position, in welcher er mit der Halterung (21) zusammenwirkt, um das Lager in der Halterung zu blockieren,
- Verriegelungsmittel (24) des Flanschs in aktiver Position,
und dass die Führungsplatte (23) mit dem mindestens einen Flansch (22) fest verbunden ist.

3. Vorrichtung nach Anspruch 2, **dadurch gekennzeichnet, dass** der Flansch (22) in Bezug auf die Halterung (21) um eine Schwenkachse (223) schwenkend angebracht ist, die an einem seiner Enden angeordnet ist, und dass er an seinem gegenüberliegenden Ende Mittel (224) zum Zusammenwirken mit den Verriegelungsmitteln (24) des Flanschs in aktiver Position aufweist.

4. Vorrichtung nach Anspruch 3, **dadurch gekennzeichnet, dass** die Verriegelungsmittel (24) ein Gewindestift (241) sind, der an seiner Basis in Bezug auf die Halterung (21) schwenkend angebracht ist, und eine Mutter (242), und dass die auf dem Flansch (22) vorgesehenen Mittel zum Zusammenwirken (224) eine Aufnahmeöffnung des freien Endes des Gewindestifts (241) sind.

5. Vorrichtung nach einem der Ansprüche 2 bis 4, **dadurch gekennzeichnet, dass** sie zwei Flansche (22) umfasst, die durch die Führungsplatte (23) miteinander verbunden sind.

6. Vorrichtung nach einem der vorangehenden Ansprüche, **dadurch gekennzeichnet, dass** die Längsachsen (Y3-Y'3, Y4-Y'4) der Führungsöffnungen (231) mit der Längsachse (X-X') des Gestells (2) nicht schneidend sind.

7. Vorrichtung nach Anspruch 6, **dadurch gekennzeichnet, dass** sich die Längsachsen (Y3-Y'3, Y4-Y'4) der Führungsöffnungen (231) in einer vertikalen Ebene (P1, P2) senkrecht zur Längsachse (X-X') des Gestells (2) erstrecken und einen identischen Winkel (β) beiderseits einer vertikalen Längsebene (P3) bilden, welche die Längsachse (X-X') des Gestells einschließt.

8. Vorrichtung nach einem der vorangehenden Ansprüche, **dadurch gekennzeichnet, dass** die zwei Führungsöffnungen (231) längs in einem Abstand beabstandet sind, der dem entspricht, der zwischen den Ausgangsöffnungen der Bereitschaftssysteme auf der äußeren Oberfläche des Gleitlagers vorhanden ist.

9. Vorrichtung nach einem der vorangehenden Ansprüche, **dadurch gekennzeichnet, dass** die Einführspitze (3) der Restriktoren einen Spitzenkörper (31) umfasst, der von einer zylindrischen Aufnahmebohrung (311) der Restriktoren durchbrochen ist, einen Drücker (32), der konfiguriert ist, um in den Körper einsetzbar zu sein und die Restriktoren aus ihm zu drücken und einen zylindrischen Stößel (33), dessen Außenwand mit einer torischen Dichtung (333) versehen ist, wobei dieser Stößel (33) konfiguriert ist, um in den Spitzenkörper (31) vor den Restriktoren einsetzbar zu sein und die Verlagerung dieser im Spitzenkörper zu bremsen.

10. Vorrichtung nach einem der vorangehenden Ansprüche, **dadurch gekennzeichnet, dass** die Momentübernahmespindel (4) ein Zylinder ist, der mehrere stufige Abschnitte mit unterschiedlichen Durchmessern umfasst, davon mindestens eine Endzone (41, 46), deren Außendurchmesser, bis auf das Gleitspiel, dem Innendurchmesser des Bereitschaftssystems des Lagers entspricht, das zur Ausstattung mit Restriktoren bestimmt ist, eine Übergangszone (42, 45), deren Außendurchmesser, bis auf das Gleitspiel, dem Innendurchmesser der Führungsöffnung (231) entspricht, und eine Zone (43, 44), die an die vorangehende angrenzt, deren Außendurchmesser größer als der Innendurchmesser der Führungsöffnung (231) ist.

11. Verfahren zur Ringverstärkung von Restriktoren im Inneren der Bereitschaftssysteme zur hydraulischen Versorgung eines Gleitlagers, **dadurch gekennzeichnet, dass** es die folgenden Schritte umfasst, die bestehen im:
- Erwärmen des Gleitlagers,
- Einführen desselben in das Aufnahmegestell (2) der Vorrichtung zur Ringverstärkung nach einem der vorangehenden Ansprüche,
- Ausrichten des Lagers derart, dass die Ausgangsmündungen seiner Bereitschaftssysteme gegenüber den Führungsöffnungen (231) der Führungsplatte (23) sind,
- Einführen der Momentübernahmespindel (4) in eine der Führungsöffnungen (231), bezeichnet als "erste Führungsöffnung", und in das gegenüberliegende Bereitschaftssystem,
- Einführen der Spitze (3), welche die Restriktoren enthält, in die andere Führungsöffnung (231), bezeichnet als "zweite Führungsöffnung", und in das gegenüberliegende Bereitschaftssystem, und Einwirken auf die Spitze (3), um die Restriktoren im Inneren des Bereitschaftssystems zu ringverstärken,
- Entfernen der Spitze (3) und der Spindel (4) aus den Führungsöffnungen (231),
- Einführen der Momentübernahmespindel (4) in die zweite Führungsöffnung (231) und in den oberen Teil des gegenüberliegenden Bereitschaftssystems,
- Einführen der Spitze (3), welche die Restriktoren enthält, in die erste Führungsöffnung (231) und in das gegenüberliegende Bereitschaftssystem, und Einwirken auf die Spitze, um die Restriktoren im Inneren des Bereitschaftssystems zu ringverstärken,
- Entfernen der Spitze (3) und der Spindel (4) aus den Führungsöffnungen (231).

## Claims

1. A hoop reinforcing device (1) of restrictors inside at least two hydraulic supply standby systems of a journal bearing, comprising :
- a frame (2) for receiving said journal bearing,
**characterized in that** the hoop reinforcing device comprises:
- a syringe (3) for introducing restrictors and
- a torque pickoff spindle (4),
and **in that** said frame (2) comprises:
- a cradle (21),
- a guide plate (23) perforated with at least two guide openings (231), inclined at the same angle as those of said standby systems of the bearing, so as to be located in the continuation of the latter when the bearing is in the frame (2), these guide openings (231) being formed to receive said syringe (3) or said torque pickoff spindle (4).

2. The device according to claim 1, **characterized in that** said frame (2) comprises:
- a cradle (21) for receiving said journal bearing,
- at least one flange (22) for retaining said bearing, capable of occupying a position called "passive" in which it is separated from the cradle (21) and allows the introduction of the bearing into the latter, and a position called "active" in which it cooperates with the cradle (21) to immobilize said bearing in the cradle,
- means (24) for locking said flange in the active position,
and **in that** said guide plate (23) is integral with said at least one flange (22).

3. The device according to claim 2, **characterized in that** said flange (22) is pivotally mounted with respect to the cradle (21) around a pivoting axis (223) disposed at one of its ends, and **in that** it has at its opposite end means (224) of cooperation with said means (24) for locking the flange in the active position.

4. The device according to claim 3, **characterized in that** said locking means (24) are a threaded rod (241) pivotally mounted at its base with respect to the cradle (21) and a nut (242), and **in that** the cooperation means (224) provided on the flange (22) are an opening for receiving the free end of said threaded rod (241).

5. The device according to one of claims 2 to 4, **characterized in that** it comprises two flanges (22) connected together by said guide plate (23).

6. The device according to one of the preceding claims, **characterized in that** the longitudinal axes (Y3-Y'3, Y4-Y'4) of the guide openings (231) are not crossing with the longitudinal axis (X-X') of the frame (2).

7. The device according to claim 6, **characterized in that** the longitudinal axes (Y3-Y'3, Y4-Y'4) of the guide openings (231) extend in a vertical plane (P1, P2) perpendicular to the longitudinal axis (X-X') of the frame (2) and form an identical angle (β) on either side of a longitudinal vertical plane (P3) which includes the longitudinal axis (X-X') of the frame.

8. The device according to one of the preceding claims, **characterized in that** the two guide openings (231) are spaced longitudinally by a distance corresponding to that existing between the outlet openings of the standby systems at the outer surface of said journal bearing.

9. The device according to one of the preceding claims, **characterized in that** said syringe (3) for introducing the restrictors comprises a syringe body (31) perforated with a cylindrical bore (311) for receiving said restrictors, a push-piece (32) configured to be able to be inserted into the body and push the restrictors out of the latter and a cylindrical slide (33) of which the outer wall is provided with an O-ring (333), this slide (33) being configured to be able to be inserted into the syringe body (31) downstream of the restrictors and slow their movement in the syringe body.

10. The device according to one of the preceding claims, **characterized in that** said torque pickoff spindle (4) is a cylinder comprising several stepped portions with different diameters, including at least one end zone (41, 46) of which the outer diameter corresponds, within the sliding clearance, to the inner diameter of the standby system of the bearing intended to be equipped with restrictors, an intermediate zone (42, 45) of which the outer diameter corresponds, within the sliding clearance, to the inner diameter of the guide opening (231) and a zone (43, 44) contiguous with the preceding one of which the outer diameter is greater than the inner diameter of the guide opening (231).

11. A method for hoop reinforcing of restrictors inside hydraulic supply standby systems of a journal bearing, **characterized in that** it comprises the following steps of:
- heating the journal bearing,
- introducing it into the receiving frame (2) of the hoop reinforcing device according to one of the preceding claims,
- orienting the bearing so that the outlet mouths of its standby systems are facing the guide openings (231) of the guide plate (23),
- introducing the torque pickoff spindle (4) into one of said guide openings (231), called the "first guide opening" and into the standby system situated facing it,
- introducing the syringe (3) containing the restrictors into the other guide opening (231), called the "second guide opening" and into the standby system situated facing it, and acting on the syringe (3) to hoop reinforce said restrictors inside said standby system,
- removing the syringe (3) and the spindle (4) from said guide openings (231),
- introducing the torque pickoff spindle (4) into the second guide opening (231) and into the upper portion of the standby system situated facing it,
- introducing the syringe (3) containing the restrictors into the first guide opening (231) and into the standby system situated facing it and acting on the syringe to hoop reinforce said restrictors inside said standby system,
- removing the syringe (3) and the spindle (4) from said guide openings (231).
